# EUROPEAN PATENT SPECIFICATION

(11) **EP 4 156 321 B1**
(45) Date of publication and mention of the grant of the patent: **26.11.2025**
(21) Application number: 21883097.4
(22) Date of filing: 13.10.2021
(51) Int. Cl.: H01M 4/13, H01M 4/36, H01M 4/38, H01M 4/62, H01M 4/66, H01M 4/139, H01M 4/04, H01M 10/052, H01M 4/02, H01M 4/136, H01M 4/1397, H01M 4/40

(54) **CATHODE FOR LITHIUM SECONDARY BATTERY, MANUFACTURING METHOD THEREFOR, AND LITHIUM SECONDARY BATTERY INCLUDING SAME**
KATHODE FÜR LITHIUMSEKUNDÄRBATTERIE, HERSTELLUNGSVERFAHREN DAFÜR UND LITHIUMSEKUNDÄRBATTERIE DAMIT
CATHODE POUR BATTERIE SECONDAIRE AU LITHIUM, SON PROCÉDÉ DE FABRICATION ET BATTERIE SECONDAIRE AU LITHIUM COMPRENANT CELLE-CI

(30) Priority: 21.10.2020 KR 20200136489
(43) Date of publication of application: 29.03.2023
(73) Proprietor: LG Energy Solution, Ltd., Seoul 07335 (KR)
(72) Inventor: KIM, Minsu, Daejeon 34122 (KR); HONG, Kyungsik, Daejeon 34122 (KR); SHIN, Dongseok, Daejeon 34122 (KR)
(74) Representative: Goddar, Heinz J.
(86) International application number: PCT/KR2021/014071
(87) International publication number: WO 2022/086026

(56) References cited:
- EP-A1- 3 483 952
- CN-B- 103 811 731
- KR-A- 20150 050 075
- KR-A- 20160 051 610
- KR-A- 20190 109 284
- KR-A- 20190 109 284
- US-B2- 8 241 541
- DILLARD CAITLIN, CHUNG SHENG-HENG, SINGH ARVINDER, MANTHIRAM ARUMUGAM, KALRA VIBHA: "Binder-free, freestanding cathodes fabricated with an ultra-rapid diffusion of sulfur into carbon nanofiber mat for lithium sulfur batteries", MATERIALS TODAY ENERGY, vol. 9, 1 September 2018 (2018-09-01), pages 336 - 344, XP055871550, ISSN: 2468-6069, DOI: 10.1016/j.mtener.2018.06.004

## Description

### Field of Disclosure

The present disclosure relates to a positive electrode for a lithium-sulfur secondary battery, a manufacturing method thereof, and a lithium-sulfur secondary battery comprising the same.

### Background

Recently, with the rapid development in the field of electronic devices and electric vehicles, the demand for secondary batteries is increasing. In particular, with the trend toward miniaturization and weight reduction of portable electronic devices, there is a growing demand for secondary batteries having a high energy density that can cope with them.

Among the secondary batteries, a lithium-sulfur secondary battery is a secondary battery that uses sulfur-based compounds having a sulfur-sulfur bond as a positive electrode active material, and uses alkali metals such as lithium, carbon-based materials in which intercalation and deintercalation of metal ions such as lithium ions occur, or silicon or tin, which forms an alloy with lithium, as a negative electrode active material. Specifically, during the discharging which is a reduction reaction, as the sulfur-sulfur bond is cut off, the oxidation number of sulfur decreases, and during the charging which is an oxidation reaction, as the oxidation number of sulfur increases, the sulfur-sulfur bond is re-formed. Through this oxidation-reduction reaction, electrical energy is stored and generated.

In particular, sulfur used as a positive electrode active material in lithium-sulfur secondary batteries has a theoretical energy density of 1.675 mAh/g, and thus has a theoretical energy density of about five times higher than the positive electrode active material used in conventional lithium secondary batteries, thereby enabling batteries to express high power and high energy density. In addition, since sulfur has the advantage of being cheap and rich in resources and thus being readily available and environmentally friendly, sulfur is drawing attention as an energy source not only for portable electronic devices but also for medium and large devices such as electric vehicles.

Since sulfur has an electrical conductivity of 5x10⁻³⁰ S/cm, which is a nonconductor without electrical conductivity, there is a problem that the movement of electrons generated by the electrochemical reaction is difficult. Accordingly, sulfur is compounded with an electrically conductive material such as carbon that can provide an electrochemical reaction site, and the sulfur-carbon composite produced thereby is used.

In order to use the sulfur-carbon composite as a positive electrode active material, a method of manufacturing a positive electrode through a slurry process of preparing a slurry using the sulfur-carbon composite with an electrically conductive material and a binder, and then applying the slurry to a current collector is generally used.

However, the positive electrode manufactured by this slurry process has a problem in that due to the electrically conductive material and the binder used in preparing the slurry, the loading amount of the positive electrode active material in the positive electrode is lowered, so that the energy density is also reduced. In addition, there is a problem in that since the slurry process comprises detailed processes such as mixing, coating, drying, and rolling, time and cost are increased.

Therefore, it is necessary to develop a technology for manufacturing a positive electrode for a lithium-sulfur secondary battery with high loading of the positive electrode active material by a simple process.

### Related Arts

Korean Patent Application Publication No. 10-2019-

Chinese Patent Application Publication No. 109873120

US Patent Application Publication No. 2018-0212252

EP 3 483 952 A1 provides a lithium-ion secondary battery comprising an electrode comprising a primer layer for protecting a current collector and a crosslinking agent layer comprising a compound being capable of crosslinking an aqueous binder contained in the primer layer, the both layers being disposed between a current collector and an active material layer comprising a sulfur-based active material.

KR 2019 0 109 284 A relates to a method for manufacturing an electrode for a secondary battery comprising a cutting step of manufacturing an active material film by cutting an active material bulk; and a binding step of integrating a current collector and the active material film.

CN 103 811 731 B discloses a kind of graphene-sulfur combination electrode material and its preparation method and application, belonging to the field of electrochemical batteries.

### Summary

Accordingly, the inventors of the present disclosure have conducted various researches to solve the above problem, and as a result, have confirmed that when the property of the sulfur formed on the surface of the sulfur-carbon composite, which is melt under pressure and aggregates with the surrounding sulfur, and the flexibility of the carbon material are used, a free-standing film positive electrode material can be manufactured by a dry process that applies pressure conditions to the sulfur-carbon composite, and the free-standing film positive electrode material can be bonded to the current collector even with a small amount of binder, and thus have completed the present disclosure.

Therefore, it is an object of the present invention to provide a positive electrode for a lithium-sulfur secondary battery that is easy to manufacture while having a high loading amount of sulfur.

In addition, it is another object of the present invention to provide a lithium-sulfur secondary battery comprising the positive electrode for the lithium-sulfur secondary battery.

In order to achieve the above objects, the present invention provides a positive electrode for a lithium-sulfur secondary battery comprising a positive electrode current collector; a binder layer; and a positive electrode active material layer, wherein the binder layer and the positive electrode active material layer are sequentially formed on at least one surface of the positive electrode current collector, wherein an application amount per unit area of the binder layer is 0.1 to 20 µg/cm², and wherein the positive electrode active material layer comprises a free-standing film positive electrode material, wherein the free-standing film positive electrode material is composed of 50 wt% to 80 wt% of sulfur and 20 wt% to 50 wt% of a porous carbon material, and wherein the free-standing film positive electrode material has an internal adhesive force of 0.098 N/cm (10 gf/cm) or more as measured using an adhesive force measuring device.

In addition, the present invention provides a method for manufacturing the positive electrode for a lithium-sulfur secondary battery comprising the steps of (1) forming a binder layer on a positive electrode current collector; and (2) attaching a positive electrode active material layer comprising a free-standing film positive electrode material on the binder layer.

In addition, the present disclosure provides a lithium-sulfur secondary battery comprising the positive electrode for the lithium-sulfur secondary battery; a negative electrode comprising lithium metal or lithium alloy; a separator between the positive electrode and the negative electrode; and an electrolyte in which the positive electrode, the negative electrode and the separator are immersed.

The positive electrode for the lithium-sulfur secondary battery according to the present disclosure can exhibit improved performance and lifetime because the content of sulfur is high and the content of non-capacity substances such as binder is small. In addition, the positive electrode for the lithium-sulfur secondary battery according to the present disclosure can be manufactured by a simple dry process of pressing sulfur-carbon composite, rather than a slurry process that includes a series of detailed processes including mixing, coating, drying and rolling, and thus it can improve process efficiency in terms of cost and time.

### Brief Description of Drawings

FIG. 1 is a graph showing the results of performance evaluation of lithium-sulfur secondary batteries of Example 1 and Comparative Example 1 according to Experimental Example 2.
FIG. 2 is a graph showing the results of performance evaluation of lithium-sulfur secondary batteries of Examples 1 and 2 according to Experimental Example 2.

### Detailed Description

Hereinafter, the present disclosure will be described in more detail.

The terms and words used in the present specification and claims should not be construed as limited to ordinary or dictionary terms, and should be construed in a sense and concept consistent with the technical idea of the present disclosure, based on the principle that the inventor can properly define the concept of a term to describe his invention in the best way possible.

The terminology used in the present disclosure is for the purpose of describing particular embodiments only and is not intended to be limiting of the invention. The singular forms "a," "an," and "the" include plural referents unless the context clearly dictates otherwise. It is to be understood that the terms "comprise" or "have" as used in the present disclosure, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

As used herein, the term "free-standing film" refers to a film capable of maintaining a film shape by itself without a separate support at room temperature and pressure.

The lithium-sulfur secondary battery, among secondary batteries, has high theoretical discharging capacity and theoretical energy density, and also sulfur, used as a positive electrode active material, is rich in reserves and is inexpensive and environmentally friendly, and thus the lithium-sulfur secondary battery is in the spotlight as a next generation battery.

A conventional positive electrode for a lithium-sulfur secondary battery was manufactured by applying a slurry containing a positive electrode active material, an electrically conductive material, a binder, etc. to a positive electrode current collector.

However, there is a disadvantage in that since the slurry used for manufacturing the positive electrode essentially contains not only the positive electrode active material but also other materials such as an electrically conductive material and a binder, there is a limit to the loading amount of the positive electrode active material, and thus the energy density is lowered. In addition, in the case of the conventional process using the slurry, there is a problem that since a series of detailed processes such as mixing, coating, drying and rolling are performed, the process is not only complicated, but also time and cost-consuming.

In addition, the positive electrode and the negative electrode must comprise a current collector for fixing a tab thereto, because the tab electrically connecting each of the positive electrode and the negative electrode to an external circuit must be provided for operation of the lithium-sulfur secondary battery.

Therefore, the present disclosure provides a positive electrode for a lithium-sulfur secondary battery that is easy to manufacture while having a high loading amount of sulfur compared to the conventional electrode, by incorporating a free-standing film positive electrode material into the positive electrode active material layer, rather than applying the slurry to the current collector, and then bonding this to the current collector through a small amount of binder.

Specifically, the positive electrode for the lithium-sulfur secondary battery according to the present invention comprises a positive electrode current collector; a binder layer; and a positive electrode active material layer, wherein the binder layer and the positive electrode active material layer are sequentially formed on at least one surface of the positive electrode current collector, wherein an application amount per unit area of the binder layer is 0.1 to 20 µg/cm², and wherein the positive electrode active material layer includes a free-standing film positive electrode material, wherein the free-standing film positive electrode material is composed of 50 wt% to 80 wt% of sulfur and 20 wt% to 50 wt% of a porous carbon material, and wherein the free-standing film positive electrode material has an internal adhesive force of 0.098 N/cm (10 gf/cm) or more as measured using an adhesive force measuring device.

In the present disclosure, the positive electrode current collector supports the positive electrode active material layer to be described later, and serves to transfer electrons between the external conductive wire and the positive electrode active material layer.

The positive electrode current collector is not particularly limited as long as it has high electrical conductivity without causing chemical changes in the lithium-sulfur secondary battery. For example, the positive electrode current collector may be copper, stainless steel, aluminum, nickel, titanium, palladium, sintered carbon, copper or stainless steel surface-treated with carbon, nickel, titanium, silver or the like, aluminum-cadmium alloy or the like.

The positive electrode current collector may have a fine irregularity structure on the surface of the positive electrode current collector or adopt a three-dimensional porous structure in order to increase bonding force with the positive electrode active material layer. Accordingly, the positive electrode current collector may be formed in various forms such as film, sheet, foil, mesh, net, porous body, foam, or nonwoven fabric.

In the present disclosure, the binder layer is positioned between the positive electrode current collector and a positive electrode active material layer which is described below such that the positive electrode active material layer is attached to the positive electrode current collector.

The positive electrode for the lithium-sulfur secondary battery according to the present disclosure bonds the positive electrode active material layer to be described later and the positive electrode current collector through the binder layer. Accordingly, since non-capacity substances such as binder are not added to the positive electrode active material layer, there is an advantage that not only can the loading amount of sulfur in the positive electrode active material layer be increased, but also the electrochemical reaction efficiency is excellent. In addition, since the binder layer is used only in an amount necessary to maintain the bonding between the positive electrode active material layer to be described later and the positive electrode current collector, the amount of binder can be dramatically lowered compared to the conventional electrode, thereby increasing the electrochemical reactivity of the positive electrode for the lithium-sulfur secondary battery. In addition, since the positive electrode active material layer to be described later can be directly attached to the positive electrode current collector through the binder layer, there may be an advantage in the manufacturing process that no separate equipment is required and the time required for the process can be reduced.

The binder layer may comprise at least one selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder layer may include at least one selected from the group consisting of styrene butadiene rubber, polytetrafluoroethylene, carboxymethylcellulose, polyacrylic acid, lithium polyacrylate, and polyvinylidene fluoride.

The application amount per unit area of the binder layer, that is, the content of binder per unit area of the binder layer is 0.1 to 20 µg/cm², preferably 0.2 to 15 µg/cm², more preferably 0.5 to 10 µg/cm², more preferably 0.5 to 5 µg/cm². If the application amount per unit area of the binder layer is less than the above range, the adhesive force between the positive electrode active material layer and the positive electrode current collector is insufficient, and detachment may occur. On the contrary, if the application amount per unit area of the binder layer exceeds the above range, there is a problem that the conductivity is lowered and the initial discharging capacity of the battery is lowered, and as a large shrinkage occurs in the process of drying the binder layer, the adhesive force is deteriorated, and thus there may be a phenomenon in which the positive electrode active material layer to be described later is detached.

The binder layer may be 0.002 to 0.5 wt%, preferably 0.004 to 0.3 wt%, more preferably 0.01 to 0.2 wt%, based on 100 wt% of the positive electrode active material layer. When compared to including the binder in the positive electrode active material layer in the range of 3 to 10 wt% based on the total weight of the positive electrode active material layer in the case of an existing a positive electrode for a lithium-sulfur secondary battery, the positive electrode for the lithium-sulfur secondary battery according to the present disclosure contains only a remarkably small amount, and thus exhibits better electrochemical reactivity of the positive electrode.

The binder layer may have a thickness of 0.1 to 20 µm, preferably 0.5 to 10 µm. If the thickness of the binder layer falls within the above-described range, while the positive electrode active material layer to be described later is firmly attached to the positive electrode current collector, the electron conductivity between them may not be inhibited.

The binder layer may or may not comprise an electrically conductive material. If the binder layer does not comprise an electrically conductive material, electrochemical reactivity of the positive electrode for the lithium-sulfur secondary battery can be improved by bonding to the current collector with a minimum amount of the binder.

In the present disclosure, the positive electrode active material layer comprises a free-standing film positive electrode material.

The free-standing film positive electrode material comprises a sulfur-carbon composite composed of 50 wt% to 80 wt% of sulfur and 20 wt% to 50 wt% of a porous carbon material.

The sulfur-carbon composite refers to a form in which the sulfur is supported on the porous carbon material. For example, the sulfur-carbon composite may be in a state in which the sulfur is attached or coated on the surface of the porous carbon material. In addition, the sulfur-carbon composite may also be in a state in which the sulfur is attached to, filled or coated with the internal pores of the porous carbon material; or in a state in which the sulfur penetrates and adheres to the inside of the porous carbon material.

The positive electrode material is in the type of a free-standing film, and the free-standing film positive electrode material itself can be used as a positive electrode material without a process of applying it to the current collector (not according to the invention).

Since the free-standing film positive electrode material is prepared by a dry process using sulfur and a porous carbon material as raw materials, there is an advantage that the positive electrode for the lithium-sulfur secondary battery according to the present disclosure contains only the sulfur and the porous carbon material in the positive electrode active material layer, and thus loading amount of sulfur, which is a positive electrode active material, is high. In addition, the dry process can omit a series of detailed processes such as mixing, coating, drying, and rolling required in the conventional slurry process, thereby reducing process costs. In addition, since the dry process does not use a slurry, the free-standing film positive electrode material of the present disclosure prepared by the dry process does not contain a binder at all, so it is possible to fundamentally remove the deterioration of the battery performance due to the binder resistance.

In addition, since the free-standing film type positive electrode material of the present disclosure manufactured by the dry process does not contain an electrically conductive material at all, the problem of deterioration of formability due to the electrically conductive material having insufficient cohesive force can be minimized. In addition, the free-standing film positive electrode material is connected by sulfur formed on the surface of the porous carbon material in a state in which the porous carbon material forms a skeleton of the positive electrode material, thereby exhibiting a free-standing film form.

In addition, the free-standing film positive electrode material has 0.098 N/cm (10 gf/cm) or more of an internal adhesive force of the free-standing film positive electrode material after the electrode is press-molded. The internal adhesive force is due to the property that sulfur is melted and aggregated with the surrounding sulfur during the pressing process. If the internal adhesive force of the free-standing film positive electrode material is less than 0.098 N/cm (10 gf/cm), it may be difficult to form into a film form due to insufficient adhesive force. Specifically, the internal adhesive force is 0.098 N/cm (10 gf/cm) or more, preferably, 0.147 N/cm (15 gf/cm) or more, 0.196 N/cm (20 gf/cm) or more, 0.245 N/cm (25 gf/cm) or more, 0.294 N/cm (30 gf/cm) or more, or 0.343 N/cm (35 gf/cm) or more. In addition, the upper limit of the adhesive force is 0.490 N/cm (50 gf/cm) or less, 0.588 N/cm (60 gf/cm) or less, 0.686 N/cm (70 gf/cm) or less, 0.784 N/cm (80 gf/cm) or less, 0.882 N/cm (90 gf/cm) or less or 0.98 N/cm (100 gf/cm) or less, but is not limited thereto, and the higher the internal adhesive force of the free-standing film positive electrode material, the better in terms of moldability, durability, and battery performance.

In addition, the free-standing film positive electrode material may have a porosity of 68% or less, 65% or less, 60% or less, 55% or less, and 45% or more or 50% or more. If the porosity of the free-standing film positive electrode material is more than 68%, the durability of the free-standing film positive electrode material may be reduced. If the porosity of the free-standing film positive electrode material is less than 45%, since the space in which the electrochemical reaction occurs in the pores is narrowed, it may be difficult to operate the battery normally.

In the present disclosure, the sulfur may be at least one selected from the group consisting of inorganic sulfur (S₈), Li₂Sₙ(n ≥ 1, n is an integer), organic sulfur compound, and carbon-sulfur polymer ((C₂Sₓ)ₙ, wherein, 2.5 ≤ x ≤ 50, n ≥ 2, x and n are integers).

In addition, the sulfur is contained in an amount of 50 wt% or more, preferably, 55 wt% or more, or 60 wt% or more and 80 wt% or less, preferably, 75 wt% or less, more preferably, 70 wt% or less, , based on the total weight of the sulfur-carbon composite. If the content of sulfur is less than 50 wt%, as the ratio of sulfur, which is an electrochemically active material, is reduced, the sulfur coating layer formed on the surface of the porous carbon material becomes thinner, thereby making it difficult to form a sulfur-carbon composite properly, or the amount of sulfur contained in the interior of the porous carbon material may be reduced, thereby reducing the capacity of the battery. In addition, if the content of sulfur is more than 80 wt%, the non-conductive sulfur may block the conductive structure of the porous carbon material, thereby blocking electrochemical activity and thus limiting the operation of the battery.

When sulfur is contained in an amount of 50 wt% to 80 wt% in the sulfur-carbon composite, it is supported in a form that is appropriately attached, coated, or filled on the surface and/or in the pores of the porous carbon material, so that a free-standing positive electrode can be stably formed.

In the present disclosure, the porous carbon material may have a structure in which pores or hollows are formed therein, or may be a porous carbon material having a high specific surface area, and may be any material that is commonly used in the art.

The porous carbon material may be, but is not limited to, at least one selected from the group consisting of graphite; graphene; carbon blacks selected from Denka black, acetylene black, Ketjen black, channel black, furnace black, lamp black, and thermal black; carbon nanotubes (CNT) selected from single wall carbon nanotube (SWCNT) and multiwall carbon nanotubes (MWCNT); carbon fibers selected from graphite nanofiber (GNF), carbon nanofiber (CNF), and activated carbon fiber (ACF); and activated carbon. Preferably, the porous carbon material may be carbon nanotubes.

The carbon nanotube may have more connection points due to structural characteristics, which may be more advantageous when forming a free-standing film. Specifically, since the carbon nanotubes have a shape having an aspect ratio of more than 1, they may be advantageously connected to each other to form a free-standing film.

In addition, the graphene refers to the form of a single layer in which carbon atoms are arranged in a honeycomb shape in two dimensions, and is a material that has a thin, wide cross-sectional area and excellent electrical conductivity, and exhibits excellent physical properties such as bending characteristics and high sensitivity to light. In the present disclosure, graphene comprises all reduced graphene formed by reducing graphene oxide, physically exfoliated graphene, and the like. The thin film of graphene may be comprised in the form of enclosing the outer surface of the carbon nanotube, and can suppress the leaching of sulfur into the electrolyte solution during operation of the battery while reinforcing the electrical conduction path.

Further, the content of the porous carbon material is 20 wt% or more, 25 wt% or more, 30 wt% or more, or 35 wt% or more, and 40 wt% or less, 45 wt% or less, or 50 wt% or less, based on the total weight of the sulfur-carbon composite. If the content of the porous carbon material is less than 20 wt%, the surface area and space on which sulfur can be filled, attached or coated is not sufficiently provided, and thus the electrochemical availability (reactivity) of sulfur may be reduced. If the carbon material is more than 50 wt%, the sulfur content may be relatively reduced, and thus, the energy density of the battery may be excessively reduced when applied to a lithium-sulfur secondary battery.

In addition, the present invention provides a method for manufacturing the positive electrode for a lithium-sulfur secondary battery comprising the steps of (1) forming a binder layer on a positive electrode current collector; and (2) attaching a positive electrode active material layer comprising a free-standing film positive electrode material on the binder layer.

First, step (1) is a step of forming a binder layer on a positive electrode current collector, and may be performed by a method of applying a material included in the binder layer on the positive electrode current collector. In this case, the positive electrode current collector and the binder layer are the same as described above.

The application is not particularly limited in the present disclosure, and may be any known application or coating method. For example, the application may be a method of uniformly dispersing using a doctor blade, etc., and a method such as die casting, comma coating, screen printing, vacuum filtration coating, etc.

Next, in step (2), a positive electrode active material layer comprising a free-standing film positive electrode material is attached on the binder layer to manufacture a positive electrode for a lithium-sulfur secondary battery.

At this time, the free-standing film positive electrode material is prepared by a preparation method comprising the steps of (a) mixing sulfur and a porous carbon material to form a mixture; (b) forming a sulfur-carbon composite by heat-treating the mixture prepared in step (a); and (c) filling a container with the sulfur-carbon composite prepared in step (b), and pressurizing the sulfur-carbon composite.

In general, said sulfur can be molded as its surface melts under pressure condition and aggregates with surrounding sulfur, but a positive electrode material in the form of a free-standing film cannot be prepared with said sulfur alone because it does not have flexibility.

Although the porous carbon material has flexibility, a positive electrode material in the form of a free-standing film cannot be prepared with said porous carbon material because it has insufficient cohesive force and thus cannot be molded when pressed.

On the other hand, the sulfur-carbon composite is a composite of sulfur and a porous carbon material, and since sulfur is present even on the outer surface of the porous carbon material, when pressurizing, sulfur present on the outer surface of the porous carbon material is melted and exhibits a property of aggregation with the surrounding sulfur-carbon composite, thereby enabling molding, and since the porous carbon material forming the skeleton in the sulfur-carbon composite is flexible, it is also possible to form a positive electrode material in the form of a free-standing film by punching.

Therefore, the preparing method of the positive electrode for the lithium-sulfur secondary battery of the present disclosure, as described above, further includes a process of preparing a free-standing film positive electrode material by a dry process using the characteristics of the sulfur-carbon composite during pressurization.

Hereinafter, each step of the method for preparing the free-standing film positive electrode material will be described in detail.

First, in step (a), a mixture of sulfur and a porous carbon material, which is a raw material for preparing a sulfur-carbon composite, may be formed. In this case, the type and appropriate weight range of the sulfur and porous carbon material are the same as described above.

Next, in step (b), a sulfur-carbon composite can be prepared by heat-treating the mixture formed in step (a).

When the mixture of the sulfur and the porous carbon material is heated, the sulfur is changed to a liquid state, and the sulfur in the liquid state penetrates into inside of the porous carbon material or is coated on or attached to its surface, so that a sulfur-carbon composite having the sulfur supported on or filled in and/or coated on the porous carbon material may be formed. For example, if the porous carbon material is a carbon nanotube, the sulfur in a liquid state may be introduced into the carbon nanotube by capillary action and the sulfur may be supported in the carbon nanotube.

The heat treatment may be performed above the melting point of sulfur. For example, the heat treatment temperature may be 130 °C or more, 140 °C or more or 150 °C or more, and 160 °C or less, 165 °C or less or 170 °C or less. If the heat treatment temperature is less than 130 °C, since sulfur does not melt, it may be difficult to form a composite supported or coated on the porous carbon material. If the heat treatment temperature is greater than 170 °C, a sulfur-carbon composite can be prepared, but volatilization of sulfur may occur, which may cause loss of sulfur and deterioration of preparation equipment.

In addition, the heat treatment time is possible as long as it is an appropriate time enough for sulfur to be melted and supported on the porous carbon material by heat treatment, and it may be 25 minutes or more or 30 minutes or more, and 40 minutes or less, 45 minutes or less, or 50 minutes or less.

Next, in step (c), the sulfur-carbon composite formed in step (b) can be filled in a container and then pressurized to prepare a positive electrode material in the form of a free-standing film.

As described above, the sulfur-carbon composite has a characteristic of exhibiting strong self-cohesive force in a pressurized state. Specifically, the sulfur on the surface of the sulfur-carbon composites is partially melted in a pressurized state to give connectivity between the composites, thereby exhibiting a strong self-cohesive force. Therefore, when pressure is applied to the sulfur-carbon composites in the particle state, cohesive force is generated between the particles, and also, the carbon material functions as a skeleton and is flexible in itself, thereby allowing a free-standing film to be formed.

The pressure during the pressurization may be a pressure sufficient to form a free-standing film by sufficiently generating a cohesive force between the sulfur-carbon composites. For example, the pressure during the pressurization may be 0.8 Mpa or more, 0.9 Mpa or more or 1 Mpa or more, and 5 Mpa or less, 8 Mpa or less, 10 Mpa or less, 13 Mpa or less or 15 Mpa or less. If the pressure during the pressurization is less than 0.8 Mpa, a free-standing film may not be formed due to weak cohesive force between sulfur-carbon composites. If the pressure during the pressurization is more than 15 Mpa, the porosity of the positive electrode material is too low, and the structure of the positive electrode comprising it may be collapsed.

In addition, the present disclosure provides a lithium-sulfur secondary battery comprising the positive electrode for the lithium-sulfur secondary battery.

The lithium-sulfur secondary battery according to the present invention comprises a positive electrode; a negative electrode; an electrolyte interposed between them, wherein the positive electrode comprises the positive electrode for the lithium-sulfur secondary battery according to the present disclosure.

The positive electrode is as described above, and is characterized in that the free-standing film positive electrode material is comprised in the positive electrode active material layer, and the positive electrode active material layer and the positive electrode current collector are joined through a binder layer.

In particular, the positive electrode of the present invention includes a free-standing film positive electrode material prepared by a dry process that does not require a binder or an electrically conductive material in the positive electrode active material layer, and thus can be loaded with a larger amount of sulfur than the conventional electrode. Accordingly, in the present disclosure, the loading amount of sulfur in the positive electrode, that is, the mass of sulfur per unit area of the positive electrode active material layer in the positive electrode may be 3.0 to 5.0 mAh/cm². As such, as it has a high loading amount of sulfur, the lithium-sulfur secondary battery comprising the positive electrode according to the present disclosure may exhibit excellent discharging capacity and lifetime characteristics.

The negative electrode may be one in which a negative electrode active material layer comprising a negative electrode active material is formed on at least one surface of the negative electrode current collector, or may be a negative electrode active material layer (for example, a lithium metal plate, a lithium metal thin film, a lithium foil) alone.

The negative electrode current collector is for supporting the negative electrode active material layer, and is the same as described for the positive electrode current collector.

The negative electrode active material layer comprises a negative electrode active material, and may further comprise an electrically conductive material, a binder, and the like.

The negative electrode active material may comprise a material capable of reversibly intercalating or deintercalating lithium (Li⁺), a material capable of reacting with lithium ion to reversibly form lithium containing compounds, lithium metal, or lithium alloy.

The material capable of reversibly intercalating or deintercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or a lithium metal powder.

The method of forming the negative electrode active material is not particularly limited, and a method of forming a layer or film commonly used in the art may be used. For example, methods such as compression, coating, and deposition may be used. In addition, a case, in which a thin film of metallic lithium is formed on a metal plate by initial charging after assembling a battery without a lithium thin film in the current collector, is also comprised in the negative electrode of the present disclosure.

The electrically conductive material is a material that electrically connects the negative electrode active material and the electrolyte to serve as a path through which electrons provided from the current collector move to the negative electrode active material, and may be used without limitation as long as it has electrical conductivity.

For example, as an electrically conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum powder and nickel powder; or electrically conductive polymers such as polyaniline, polythiophene, polyacetylene, and polypyrrole may be used alone or in combination.

The binder is the same as described for the binder layer.

The electrolyte comprises lithium ions and is used for causing an electrochemical oxidation or reduction reaction between a positive electrode and a negative electrode through these.

As the electrolyte, all of those commonly used in lithium secondary batteries may be used.

For example, in the electrolyte, the lithium salts that can be comprised as an electrolyte can be used without limitation as long as they are those commonly used in the electrolyte for lithium secondary batteries, and for example, the anions of the lithium salts may be any one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻ , CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻ , SCN⁻ and (CF₃CF₂SO₂)₂N⁻. Specifically, the lithium salt may be LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂ (Lithium bis (perfluoroethylsulfonyl)imide, BETI), LiN(CF₃SO₂)₂(Lithium bis(Trifluoromethanesulfonyl)imide, LiTFSI), LiN(CₐF₂ₐ₊₁SO₂)(C_{b}F_{2b+1}SO₂) (wherein a and b are natural numbers, and preferably 1≤a≤20 and 1≤b≤20), lithium poly[4,4'-(hexafluoroisopropylidene)diphenoxy]sulfonylimide (LiPHFIPSI), LiCl, LiI, LiB(C₂O₄)₂, LiNO₃ or the like. Among them, a sulfonyl group-containing imide lithium compound such as LiTFSI, BETI or LiPHFIPSI may be more preferable.

In the electrolyte used in the present disclosure, as an organic solvent comprised in the electrolyte, those commonly used in the electrolyte solution for lithium secondary batteries may be used without limitation. Typically, the organic solvent may be any one selected from the group consisting of propylene carbonate (PC), ethylene carbonate (EC), diethyl carbonate (DEC), dimethyl carbonate (DMC), Ethylmethyl carbonate (EMC), methylpropyl carbonate, dipropyl carbonate, tetraethylene glycol dimethyl ether (TEGDME), dioxolane (DOL), dimethyl sulfoxide, acetonitrile, dimethoxyethane, diethoxyethane, vinylene carbonate, sulfolane, gamma-butyrolactone, propylene sulfite and tetrahydrofuran, or a mixture of two or more thereof. In particular, ethylene carbonate and propylene carbonate, which are cyclic carbonates among the carbonate-based organic solvents, are highly viscous organic solvents and can be preferably used because they have high dielectric constants and thus well dissociate lithium salts in the electrolyte. When a linear carbonate having low viscosity and low dielectric constant such as dimethyl carbonate and diethyl carbonate is mixed with such cyclic carbonates in an appropriate ratio, an electrolyte solution with high electrical conductivity can be prepared, which can be used more preferably.

The electrolyte may further comprise a nitric acid or nitrous acid-based compound as an additive in addition to the lithium salt and the organic solvent described above.

The nitric acid or nitrous acid-based compound is not particularly limited in the present disclosure, but may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂) and ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably, lithium nitrate is used.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium secondary battery. The separator may be an independent member such as a film, or may be a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a secondary battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present disclosure, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 µm to 50 µm and 10 to 95%, respectively.

The shape of the lithium-sulfur secondary battery as described above is not particularly limited and may be, for example, a jelly-roll type, a stack type, a stack-folding type (including a stack-Z-folding type), or a lamination-stacking type, and preferably a stack-folding type.

The negative electrode, the separator, and the positive electrode as described above are sequentially stacked, and the electrolyte is injecting to prepare an electrode assembly, and then the electrode assembly is placed in a battery case and sealed with a cap plate and a gasket to manufacture a lithium-sulfur secondary battery.

In this case, the lithium-sulfur secondary battery can be classified into various batteries such as lithium-sulfur secondary battery, lithium-air battery, lithium-oxide battery, and lithium all-solid-state battery depending on the materials of positive electrode/negative electrode used, can be classified into cylindrical, rectangular, coin-shaped, pouch type depending on the type, and can be divided into bulk type and thin film type depending on the size. The structure and preparation method of these batteries are well known in the art, and thus detailed description thereof is omitted.

In the present disclosure, since the lithium-sulfur secondary battery comprises the free-standing film positive electrode material comprising the sulfur-carbon composite as a positive electrode, it is a lithium-sulfur secondary battery. The lithium-sulfur secondary battery may comprise lithium metal as a negative electrode active material. During discharging of the lithium-sulfur secondary battery, an oxidation reaction of lithium occurs at the negative electrode and a reduction reaction of sulfur occurs at the positive electrode. At this time, the reduced sulfur is converted into lithium polysulfide by combining with lithium ions moved from the negative electrode, and finally, a reaction to form lithium sulfide is accompanied.

In addition, the present disclosure provides a battery module comprising the lithium-sulfur secondary battery as a unit battery.

The battery module can be used as a power source for medium-sized and large-sized devices that require high temperature stability, long cycle characteristics, high-capacity characteristics and the like.

Examples of the medium-sized and large-sized device may comprise a power tool that is powered by a battery powered motor; electric cars comprising an electric vehicle (EV), a hybrid electric vehicle (HEV), a plug-in hybrid electric vehicle (PHEV), and the like; an electric motorcycle comprising an electric bike (E-bike) and an electric scooter (E-scooter); an electric golf cart; and a power storage system, but are not limited thereto.

Hereinafter, preferred examples of the present disclosure will be described in order to facilitate understanding of the present disclosure. It will be apparent to those skilled in the art, however, that the following examples are illustrative of the present disclosure only.

### Preparation Example 1: Preparation of sulfur-carbon composite

Sulfur (S) and carbon nanotubes (CNT) were uniformly mixed in a solid state in a weight ratio of 65:35, and then ball-milled at 100 rpm for 1 hour to prepare a mixture.

The mixture was heat-treated at 155°C for 35 minutes to support sulfur into the pores of CNTs and to be coated on their surfaces to prepare a sulfur-carbon composites (S-CNT). In this case, the CNTs having a specific surface area of 350 m²/g were used.

### Example and Comparative Example

### Example 1

### (1) Manufacture of positive electrode for lithium-sulfur secondary battery

The sulfur-carbon composite (S-CNT) of Preparation Example 1 was filled in a mold, and then pressurized at a pressure of 1 MPa using a hydraulic press to prepare a free-standing film positive electrode material.

Lithium polyacrylate was applied at an application amount of 0.5 µg/cm² per unit area on an aluminum current collector with a thickness of 20 µm to form a binder layer.

The free-standing film positive electrode material was adhered to the aluminum current collector on which the binder layer was formed, to prepare a positive electrode for a lithium-sulfur secondary battery.

### (2) Manufacture of lithium-sulfur secondary battery

The positive electrode for the lithium-sulfur secondary battery prepared in (1) above and the negative electrode are positioned to face each other, and a porous polyethylene separator having a thickness of 20 µm and a porosity of 45% is interposed therebetween to prepare an electrode assembly, and the electrode assembly was placed inside the case, and 70 µℓ of electrolyte was injected into the case to prepare a lithium-sulfur secondary battery.

At this time, a lithium metal thin film with a thickness of 150 µm was used as the negative electrode, and a mixture solution in which lithium bis(trifluoromethanesulfonyl)imide (LiTFSI) of 1 M and lithium nitrate (LiNO₃) of 0.1 M were dissolved in an organic solvent in which tetraethylene glycol dimethyl ether (TEGDME)/dioxolane (DOL)/dimethoxyethane (DME) was mixed in a volume ratio of 1:1:1 was used as the electrolyte.

### Example 2

A positive electrode for a lithium-sulfur secondary battery was manufactured in the same manner as in Example 1, except that the amount application per unit area of lithium polyacrylate was 5 µg/m².

### Example 3

A positive electrode for a lithium-sulfur secondary battery was manufactured in the same manner as in Example 1, except that the amount application per unit area of lithium polyacrylate was 10 µg/cm².

### Reference Example 4

A positive electrode for a lithium-sulfur secondary battery was manufactured in the same manner as in Example 1, except that the amount application per unit area of lithium polyacrylate was 0.05 µg/m².

### Reference Example 5

A positive electrode for a lithium-sulfur secondary battery was manufactured in the same manner as in Example 1, except that the amount application per unit area of lithium polyacrylate was 30 µg/cm².

### Comparative Example 1

The same method as Example 1 was performed, except that the sulfur-carbon composite (S-CNT) of Preparation Example 1, an electrically conductive material, and a binder were mixed in a weight ratio of 90:5:5 to prepare a slurry, and then the slurry was coated on an aluminum current collector with a thickness of 20 µm, and dried and rolled to prepare a positive electrode.

At this time, vapor grown carbon fiber (VGCF) was used as the electrically conductive material, and styrene butadiene rubber (SBR) was used as the binder.

### Comparative Example 2

The same method as Example 1 was performed, except that the free-standing film positive electrode material prepared in Example 1 was used as a positive electrode.

### Experimental Example 1: Evaluation of the physical properties of the positive electrode

For the positive electrode manufactured in Examples, the adhesive force of the binder layer was measured.

Specifically, the adhesive force was measured using an adhesive force measuring device (AMETEK company, LS1), and the results obtained are shown in Table 1.

**Table 1**

| | Application amount per unit area of binder layer (µg/cm²) | Adhesive force of binder layer (N/cm (gf/cm)) |
|---|---|---|
| Example 1 | 0.5 | 0.098 (10) |
| Example 2 | 5 | 0.147 (15) |
| Example 3 | 10 | 0.245 (25) |
| Reference Example 4 | 0.05 | ~0 |
| Reference Example 5 | 30 | ~0 |

As shown in Table 1 above, it was confirmed that in the case of Examples 1 to 3, as the application amount per unit area of the binder layer was increased, the adhesive force of the binder layer was increased.

In addition, it can be seen from Reference Examples 4 and 5 that if the application amount per unit area of the binder layer is out of a certain range, the adhesive force between the free-standing film positive electrode material, which is a positive electrode active material layer, and the positive electrode current collector is reduced.

### Experimental Example 2: Evaluation of battery performance

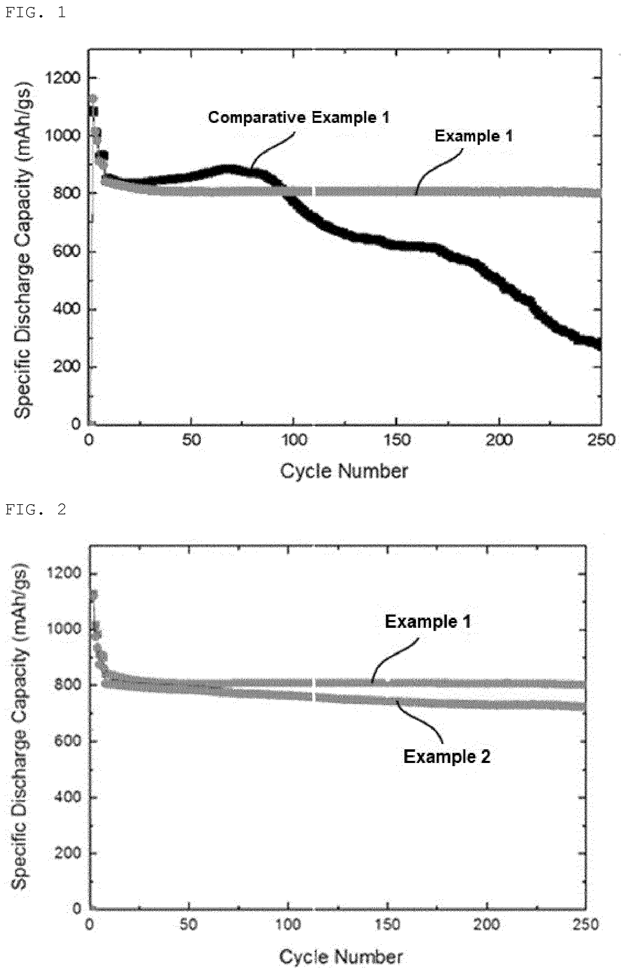

For the batteries manufactured in Examples 1 to 3, and Comparative Examples 1 and 2, capacity (mAh) was measured by performing discharging at 0.1 C at 25 °C, and charging at 0.1 C, and the capacity and charging efficiency were measured by repeatedly charging/discharging, and the results are shown in Table 2, and FIGs. 1 and 2

**Table 2**

| | Initial discharging capacity (mAh/gₛ) | Discharging capacity per electrode (mAh/g_{active}) |
|---|---|---|
| Example 1 | 1130.3 | 1130.2 |
| Example 2 | 1119.2 | 1118.1 |
| Example 3 | 251.2 | 250.1 |
| Comparative Example 1 | 1088.1 | 979.3 |
| Comparative Example 2 | 1135.2 | 1135.2 |

Referring to Table 2 and FIG. 1, it can be seen that Examples 1 and 2 containing a free-standing film positive electrode material prepared by a dry process and having a small amount of binder layer show a higher initial discharging capacity and also has excellent lifetime characteristics, as compared to Comparative Example 1 prepared using a slurry which is a wet process.

In addition, it can be seen from Table 2 and FIG. 2 that the high-rate degradation is accelerated as the application amount per unit area of the binder layer is increased.

## Claims

1. A positive electrode for a lithium-sulfur secondary battery, the positive electrode comprising:
a positive electrode current collector;
a binder layer; and
a positive electrode active material layer;
wherein the binder layer is sequentially formed on at least one surface of the positive electrode current collector, and
wherein an application amount per unit area of the binder layer is 0.1 to 20 µg/cm², and
wherein the positive electrode active material layer comprises a free-standing film positive electrode material,
wherein the free-standing film positive electrode material is composed of 50 wt% to 80 wt% of sulfur and 20 wt% to 50 wt% of a porous carbon material, and
wherein the free-standing film positive electrode material has an internal adhesive force of 0.098 N/cm (10 gf/cm) or more as measured using an adhesive force measuring device.

2. The positive electrode according to claim 1, wherein the binder layer comprises at least one selected from the group consisting of styrene butadiene rubber, acrylated styrene butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene.

3. The positive electrode according to claim 1, wherein the binder layer has a thickness of 0.1 to 20 µm.

4. The positive electrode according to claim 1, wherein the free-standing film positive electrode material has a porosity of 68% or less.

5. A method for manufacturing a positive electrode for a lithium secondary battery according to claims 1 to 4, the method comprising:
forming a binder layer on a positive electrode current collector; and
attaching a positive electrode active material layer comprising a free-standing film positive electrode material on the binder layer,
wherein the free-standing film positive electrode material is obtained by
mixing sulfur and a porous carbon material to form a mixture;
forming a sulfur-carbon composite by heat-treating the mixture; and
filling a container with the sulfur-carbon composite and pressurizing the sulfur-carbon composite,
wherein the heat-treating is performed at a temperature of 130 to 170 °C, and
the pressurizing is performed under a pressure of 0.8 to 15 MPa.

6. A lithium-sulfur secondary battery comprising:
the positive electrode according to claim 1;
a negative electrode comprising lithium metal or lithium alloy;
a separator between the positive electrode and the negative electrode; and
an electrolyte in which the positive electrode, the negative electrode and the separator are immersed.

7. The lithium secondary battery according to claim 6, wherein the positive electrode has a loading amount of sulfur of 3.0 to 5.0 mAh/cm².

## Patentansprüche

1. Positive Elektrode für eine Lithium-Schwefel-Sekundärbatterie, wobei die positive Elektrode umfasst:
einen Stromabnehmer der positiven Elektrode;
eine Binderschicht; und
eine Aktivmaterialschicht der positiven Elektrode;
wobei die Binderschicht nacheinander auf mindestens einer Oberfläche des Stromabnehmers der positiven Elektrode gebildet ist, und
wobei eine Auftragsmenge pro Flächeneinheit der Binderschicht 0,1 bis 20 µg/cm² beträgt, und
wobei die Aktivmaterialschicht der positiven Elektrode ein freistehendes Filmmaterial der positiven Elektrode umfasst,
wobei das freistehende Filmmaterial der positiven Elektrode aus 50 Gew.-% bis 80 Gew.-% Schwefel und 20 Gew.-% bis 50 Gew.-% eines porösen Kohlenstoffmaterials zusammengesetzt ist, und
wobei das freistehende Filmmaterial der positiven Elektrode eine innere Haftkraft von 0,098 N/cm (10 gf/cm) oder mehr, wie unter Verwendung einer Haftkraftmessvorrichtung gemessen, aufweist.

2. Positive Elektrode nach Anspruch 1, bei der die Binderschicht mindestens eines umfasst, ausgewählt aus der Gruppe, bestehend aus Styrol-Butadien-Kautschuk, acryliertem Styrol-Butadien-Kautschuk, Acrylnitril-Copolymer, AcrylnitrilButadien-Kautschuk, Nitril-Butadien-Kautschuk, Acrylnitril-Styrol-Butadien-Copolymer, Acrylkautschuk, Butylkautschuk, Fluorkautschuk, Polytetrafluorethylen, Polyethylen, Polypropylen, Ethylen/Propylen-Copolymer, Polybutadien, Polyethylenoxid, chlorsulfoniertem Polyethylen, Polyvinylpyrrolidon, Polyvinylpyridin, Polyvinylalkohol, Polyvinylacetat, Polyepichlorhydrin, Polyphosphazen, Polyacrylnitril, Polystyrol, Latex, Acrylharz, Phenolharz, Epoxidharz, Carboxymethylcellulose, Hydroxypropylcellulose, Celluloseacetat, Celluloseacetatbutyrat, Celluloseacetatpropionat, Cyanoethylcellulose, Cyanoethylsaccharose, Polyester, Polyamid, Polyether, Polyimid, Polycarboxylat, Polycarbonsäure, Polyacrylsäure, Polyacrylat, Lithiumpolyacrylat, Polymethacrylsäure, Polymethacrylat, Polyacrylamid, Polyurethan, Polyvinylidenfluorid und Poly(vinylidenfluorid)hexafluorpropen.

3. Positive Elektrode nach Anspruch 1, bei der die Binderschicht eine Dicke von 0,1 bis 20 µm aufweist.

4. Positive Elektrode nach Anspruch 1, bei der das freistehende Filmmaterial der positiven Elektrode eine Porosität von 68% oder weniger aufweist.

5. Verfahren zur Herstellung einer positiven Elektrode für eine Lithium-Sekundärbatterie nach den Ansprüchen 1 bis 4, wobei das Verfahren umfasst:
Bilden einer Binderschicht auf einem Stromabnehmer der positiven Elektrode; und
Anbringen einer Aktivmaterialschicht der positiven Elektrode, die ein freistehendes Filmmaterial der positiven Elektrode umfasst, auf der Binderschicht,
wobei das freistehende Filmmaterial der positiven Elektrode erhalten wird durch
Mischen von Schwefel und einem porösen Kohlenstoffmaterial, um eine Mischung zu bilden;
Bilden eines Schwefel-Kohlenstoff-Verbundstoffs durch Wärmebehandeln der Mischung; und
Füllen eines Behälters mit dem Schwefel-Kohlenstoff-Verbundstoff und Druckbeaufschlagen des Schwefel-Kohlenstoff-Verbundstoffs,
wobei das Wärmebehandeln bei einer Temperatur von 130 bis 170 °C; durchgeführt wird, und
das Druckbeaufschlagen unter einem Druck von 0,8 bis 15 MPa durchgeführt wird.

6. Lithium-Schwefel-Sekundärbatterie, umfassend:
die positive Elektrode nach Anspruch 1;
eine negative Elektrode, umfassend Lithiummetall oder Lithiumlegierung;
einen Separator zwischen der positiven Elektrode und der negativen Elektrode;
und
einen Elektrolyten, in den die positive Elektrode, die negative Elektrode und der Separator eingetaucht sind.

7. Lithium-Sekundärbatterie nach Anspruch 6, bei der die positive Elektrode eine Beladungsmenge an Schwefel von 3,0 bis 5,0 mAh/cm² aufweist.

## Revendications

1. Électrode positive pour une batterie rechargeable au lithium-soufre, l'électrode positive comprenant :
un collecteur de courant d'électrode positive ;
une couche de liant ; et
une couche de matériau actif d'électrode positive ;
dans laquelle la couche de liant est formée séquentiellement sur au moins une surface du collecteur de courant d'électrode positive, et
dans laquelle une quantité d'application par unité de surface de la couche de liant est 0,1 à 20 µg/cm², et
dans laquelle la couche de matériau actif d'électrode positive comprend un matériau d'électrode positive de film autonome,
dans laquelle le matériau d'électrode positive de film autonome est composé de 50 % en poids à 80 % en poids de soufre et de 20 % en poids à 50 % en poids d'un matériau de carbone poreux, et
dans laquelle le matériau d'électrode positive de film autonome a une force adhésive interne égale ou supérieure à 0,098 N/cm (10 gf/cm), mesurée en utilisant un dispositif de mesure de force adhésive.

2. Électrode positive selon la revendication 1, dans laquelle la couche de liant comprend un ou plusieurs éléments sélectionnés dans le groupe constitué de caoutchouc de styrène-butadiène, caoutchouc de styrène-butadiène acrylé, copolymère d'acrylonitrile, caoutchouc d'acrylonitrile-butadiène, caoutchouc de nitrile-butadiène, copolymère d'acrylonitrile-styrène-butadiène, caoutchouc acrylique, caoutchouc butyle, caoutchouc fluoré, polytétrafluoroéthylène, polyéthylène, polypropylène, copolymère d'éthylène/propylène, polybutadiène, oxyde de polyéthylène, polyéthylène chlorosulfoné, polyvinylpyrrolidone, polyvinylpyridine, alcool polyvinylique, acétate de polyvinyle, polyépichlorohydrine, polyphosphazène, polyacrylonitrile, polystyrène, latex, résine acrylique, résine phénolique, résine époxy, carboxyméthylcellulose, hydroxypropylcellulose, acétate de cellulose, butyrate d'acétate de cellulose, propionate d'acétate de cellulose, cyanoéthylcellulose, cyanoéthylsucrose, polyester, polyamide, polyéther, polyimide, polycarboxylate, acide polycarboxylique, acide polyacrylique, polyacrylate, polyacrylate de lithium, acide polyméthacrylique, polyméthacrylate, polyacrylamide, polyuréthane, fluorure de polyvinylidène et poly(fluorure de vinylidène)-hexafluoropropène.

3. Électrode positive selon la revendication 1, dans laquelle la couche de liant a une épaisseur de 0,1 à 20 µm.

4. Électrode positive selon la revendication 1, dans laquelle le matériau d'électrode positive de film autonome a une porosité égale ou inférieure à 68 %.

5. Procédé de fabrication d'une électrode positive pour une batterie rechargeable au lithium selon l'une quelconque des revendications 1 à 4, le procédé comprenant :
la formation d'une couche de liant sur un collecteur de courant d'électrode positive ; et
la fixation d'une couche de matériau actif d'électrode positive comprenant un matériau d'électrode positive de film autonome sur la couche de liant,
dans lequel le matériau d'électrode positive de film autonome est obtenu par
le mélange du soufre et d'un matériau de carbone poreux pour former un mélange ;
la formation d'un composite de soufre-carbone par traitement thermique du mélange ; et
le remplissage d'un contenant avec le composite de soufre-carbone et la pressurisation du composite de soufre-carbone,
dans lequel le traitement thermique est effectué à une température de 130 à 170°C, et
la pressurisation est effectuée à une pression de 0,8 à 15 MPa.

6. Batterie rechargeable au lithium-soufre comprenant :
une électrode positive selon la revendication 1 ;
une électrode négative comprenant du métal lithium ou un alliage de lithium ;
un séparateur entre l'électrode positive et l'électrode négative ; et
un électrolyte dans lequel l'électrode positive, l'électrode négative et le séparateur sont immergés.

7. Batterie rechargeable au lithium selon la revendication 6, dans laquelle l'électrode positive a une quantité de charge de soufre de 3,0 à 5,0 mAh/cm².
